# EUROPEAN PATENT SPECIFICATION

(11) **EP 0 595 587 B1**
(45) Date of publication and mention of the grant of the patent: **26.02.1997**
(21) Application number: 93308500.3
(22) Date of filing: 26.10.1993
(51) Int. Cl.: B29C 69/00, B29C 67/00

(54) **Method and apparatus for forming a base on a tubular container**
Verfahren und Vorrichtung zum Formen eines Bodens auf einen rohrförmigen Container
Méthode et dispositif pour former une base sur un récipient tubulaire

(30) Priority: 30.10.1992 AU 5619/92
(43) Date of publication of application: 04.05.1994
(73) Proprietor: IMPACT INTERNATIONAL PTY. LTD., Smithfield New South Wales 2164 (AU)
(72) Inventor: Lajovic, Dusan Sava, Smithfield (AU)
(74) Representative: Godwin, Edgar James

(56) References cited:
- FR-A- 1 341 915
- GB-A- 1 080 184
- GB-A- 2 190 323
- NL-A- 6 514 487
- US-A- 4 314 799
- US-A- 4 421 705

## Description

The present invention relates to a method and apparatus for forming a base on a tubular container.

Numerous such methods are known. For example, it is known in the manufacture of aluminium and tin cans to form the base onto the tubular container by rolling adjacent edge flanges into interlocking engagement. In plastic tubes and containers, it is known to mould the base from a similar material, and then to glue the base onto the tube. It is also known to glue plastic bases onto laminated cardboard tubes, and the like.

In all such prior art methods, however, a number of discrete process steps are required first to form the base itself, and then to secure the base to the tube. As is well known by those skilled in the art, excessive process steps of this nature substantially increase the costs of production and capital equipment, and lead to reduced reliability and increased maintenance of equipment and process lines. This is particularly undesirable in high rate production applications.

US-A-4,314,799 discloses a compression moulding machine for organic thermoplastic materials. For moulding articles at a high rate, "gobs" of heated organic thermoplastic material are successively deposited into open topped moulding cavities respectively defined by a plurality of moulding members, which are continuously movable around a horizontal closed loop path. In one embodiment , the moulding cavity is configured to allow an end wall to be formed on a can. The side wall of the can is applied in surrounding relationship to a plunger, which functions as a mandrel, and the extreme end of the side wall of the can is carried by the plunger into the moulding cavity so that the end wall is compression moulded into assembly with the side wall element. The plunger is maintained in position just long enough for material in the moulded end wall to become stable.

It is an object of the present invention to provide an improved method and/or apparatus which overcomes or substantially ameliorates at least some of the shortcomings of the prior art.

Accordingly, in a first aspect, the invention provides an apparatus for forming a base on a tubular container, said apparatus comprising a die, a punch plate having an aperture defining an open end of said die, a punch co- operable with said punch plate and said die, transport means to feed a strip of thermoplastic material between said punch and said punch plate, heating means to heat the thermoplastic material, and locating means to locate the container such that one end extends marginally into said die, the punch being selectively operable in a single stroke to shear off a slug of said material by forcing said strip against said plate and to punch the slug through the aperture into forming engagement with the die such that a peripheral edge of the slug is thermoplastically bonded to the exposed end of the container within the die to form said base.

Preferably, the transport means is disposed to feed the strip of hot thermoplastic material directly from an extrusion die to minimise the extent of intermediate cooling and thereby obviate the need for a separate heating step. In one embodiment, the extrusion die itself constitutes the transport means.

Preferably, the apparatus includes a vent to direct air from the die cavity during the punching cycle.

Preferably also, the apparatus further includes ejection means disposed to direct pressurised gas between the base and the die upon withdrawal of the punch to eject the container.

The punch and die are preferably liquid cooled to minimise cycle time.

In the preferred embodiment, the locating means comprises an inner shell and a complementary outer shell disposed respectively to provide inwardly and outwardly directed radial support for the side walls of the container during the forming process. One of the shells preferably incorporates abutment means to locate the remote end of the tube and thereby determine the extent to which the exposed end extends into the die. The abutment means is preferably adjustable to accommodate tubular containers of different length. In the preferred embodiment, the abutment means comprises an annular shoulder formed on the inner shell.

According to a second aspect, the invention provides a method of forming a base on a tubular container, said method comprising the steps of locating the container such that one end extends marginally into a die, heating a strip of thermoplastic material, feeding the strip of thermoplastic material between a punch and a punch plate having an aperture defining an open end of said die, shearing off a slug of said material by forcing said strip against said plate, and punching said slug through said aperture into forming engagement with said die such that a peripheral edge of the slug is thermoplastically bonded to the exposed end of the container within the die to form said base.

A preferred embodiment of the invention will now be described, by way of example only, with reference to the accompanying drawings in which:-
Figure 1 is a cross sectional side elevation showing an apparatus according to the invention; and
Figure 2 is a cross sectional view similar to Figure 1 incorporating a pair of die assemblies disposed to shuttle beneath the punch.
Figure 3 is a cross sectional view showing a tubular container incorporating a base formed in accordance with the method and apparatus of the invention.

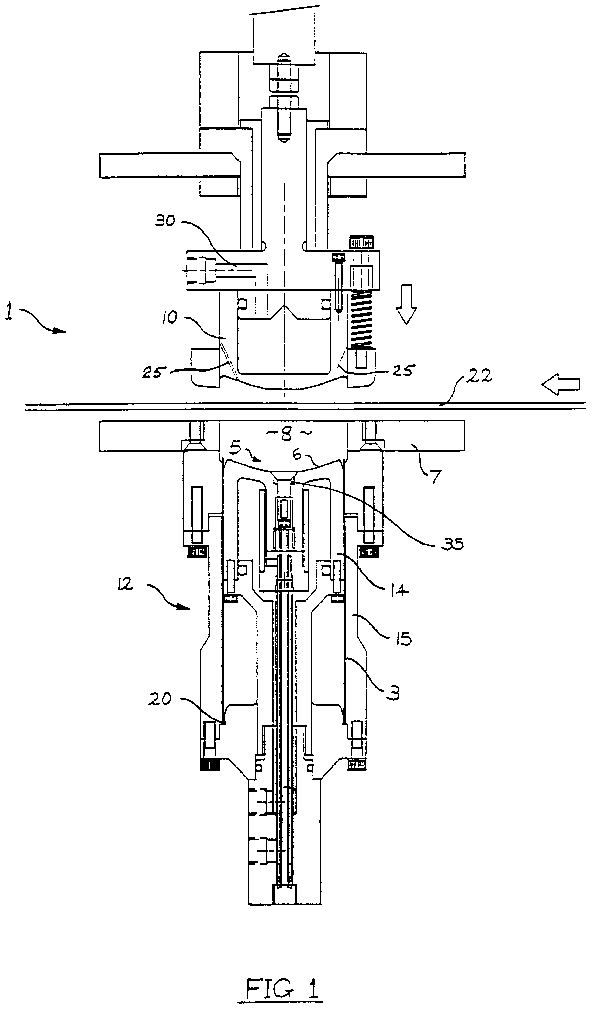

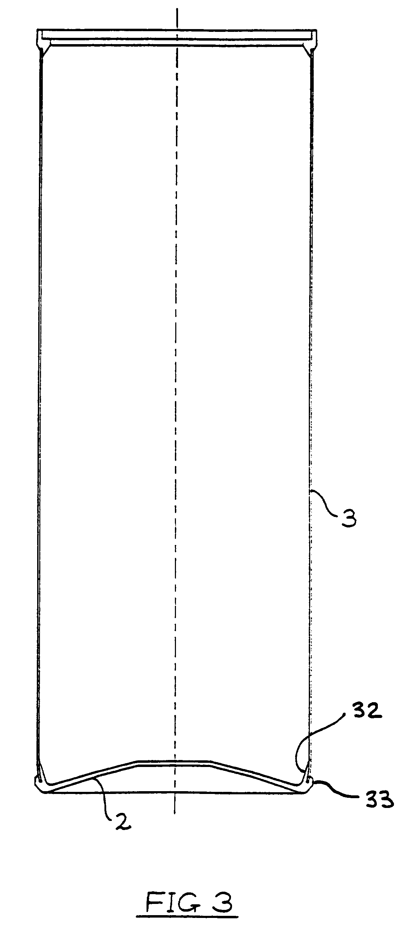

Referring firstly to Figure 1, the invention provides an apparatus 1 for forming a base 2 on a tubular container 3 as shown in Figure 3. The apparatus comprises a die 5 partially defined by a die face 6, and a fixed punch plate 7 having an aperture 8 defining an open end of the die. A punch 10 is selectively operable by means of a conventional hydraulic, pneumatic or mechanical actuator (not shown) to co-operate with the punch plate and the die.

The apparatus further includes locating means 12 in the form of respective inner and outer shells 14 and 15. The shells together define an intermediate radial clearance space adapted nestingly to accommodate the tubular container 3 and thereby provide radial support during the base forming process. The terminal end of the inner shell 14 opposite the punch forms the die face 6. The remote end of the inner shell incorporates abutment means in the form of an annular shoulder 20 to locate the remote end of the tube. The inner and outer shells and associated shoulder 20 are disposed to locate the tubular container such that an exposed end 21 extends marginally into the die cavity by several millimeters.

The apparatus further includes an extrusion die (not shown) located above the punch 10 to feed a strip or ribbon 22 of hot thermoplastic material downwardly between the punch plate 7 and the punch 10.

Turning now to describe briefly the operation of the apparatus, a tubular body or container 3 is first loaded between the inner and outer supporting shells such that the exposed marginal end 21 extends into the die cavity. A ribbon 22 of hot thermoplastic material is then extruded and progressively fed downwardly between the punch 10 and the punch plate 7. The strip 22 is fed directly from the extrusion die through the forming apparatus so that the thermoplastic material disposed adjacent the die is at an appropriate temperature for the subsequent forming operations, without the need for a separate heating step.

At the desired time, the punch is moved through the punch plate to shear off a slug of the hot material. Further movement of the punch forces the slug through the aperture 8 and into forming engagement with the lower die face 6, at which stage the punch face effectively closes the die. Whilst the slug is being driven into the die, the die cavity is vented through passages 25 in the punch 10 to prevent unintentional distortion of the hot plastic during the forming process. Application of further forming pressure by the punch causes the peripheral edge of the slug to be thermoplastically bonded to the exposed end 21 of the container within the die, in order to form the base 2. As best seen in Figure 3, the die cavity is configured such that the exposed end of the can is sandwiched between respective inner and outer lips 32 and 33 of plastic material to ensure maximum mechanical and thermoplastic bonding and an air-tight seal.

Once the base has been formed, the punch is retracted and the shell assembly 14 and 15 moved from beneath the punch. The container incorporating the freshly moulded base is then ejected from the supporting shells by compressed air injected between the die face and the base through passage 35. The cycle is then repeated.

During the forming cycles, coolant is directed through the punch through cooling passages 30. This prevents overheating of the punch head, minimises cycle time, and permits increased control over the temperature of the thermoplastic material during the forming process. Similarly, coolant may be directed through the inner and/or outer supporting shells 14 and 15 through appropriate cooling passages if required.

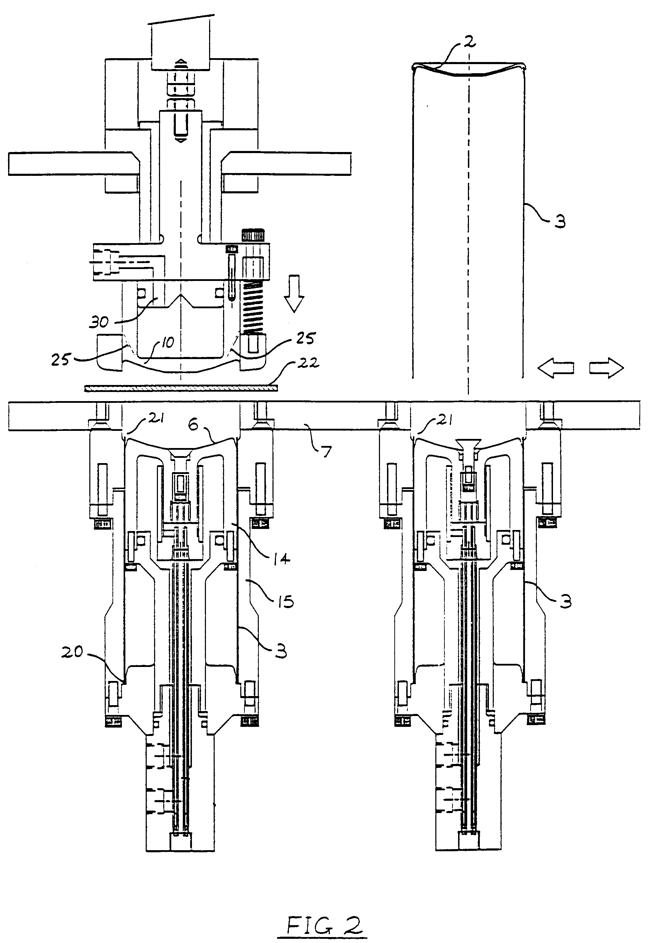

In the embodiment of Figure 2, a pair of die and shell assemblies are disposed to shuttle beneath the punch. This arrangement permits the tube to be loaded from a magazine into the free die, whilst the punch forms the base in the operative die. The positions are then alternated permitting the tube incorporating the newly formed base to be ejected whilst a base is simultaneously formed on the tube in the other die. In other embodiments, a rotary barrel supporting an array of die stations may be provided.

It will be appreciated that in accordance with the present method, the base is punched, transported into the die cavity, and formed onto the container in a single punch stroke. This minimises heat loss, reduces the force required to forge the hot slug, minimises the chance of flash within the die, obviates the need for intermediate heating steps, and substantially simplifies the forming procedure. Thus, the invention represents a commercially significant improvement over the prior art.

Although the invention has been described with reference to a specific example, it will be appreciated that the invention may be embodied in many other forms.

## Claims

1. Apparatus for forming a base (2) on a tubular container (3), the apparatus comprising a die (5), a punch plate (7) having an aperture (8) defining an open end of the die (5), a punch (10) co-operable with the punch plate (7) and the die (5), transport means for feeding a strip (22) of thermoplastic material between the punch (10) and the punch plate (7), heating means for heating the thermoplastic material, and locating means (12) for locating the container (3) such that one end extends marginally into the die (5), the punch (10) being operable in a single stroke to shear off a slug of the material by forcing the strip (22) against the punch plate (7) and to punch the slug through the aperture (8) into forming engagement with the die (5) such that a peripheral edge of the slug is thermoplastically bonded to the exposed end of the container (3) within the die (5) to form the base (2).

2. Apparatus according to claim 1, wherein the transport means is disposed to feed the strip (22) of thermoplastic material directly from an extrusion die.

3. Apparatus according to claim 2, wherein the extrusion die feeds the thermoplastic material directly between the punch (10) and the punch plate (7) and thereby constitutes the said transport means.

4. Apparatus according to any preceding claim, further including a vent (25) to direct air from the die cavity during the punch stroke.

5. Apparatus according to any preceding claim, further including ejection means disposed to direct pressurised gas between the base and the die upon withdrawal of the punch to eject the container.

6. Apparatus according to any preceding claim, wherein the locating means (12) comprises an inner shell (14) and a complementary outer shell (15) disposed respectively to provide inner and outer support for the side walls of the tubular container (3) during the forming process.

7. Apparatus according to claim 6, further including abutment means (20) for locating the remote end of the tubular container (2) and thereby determine the extent to which the exposed end extends into the die (5).

8. Apparatus according to claim 7, wherein the abutment means (20) is adjustable to permit selective variation of the extent to which the exposed end extends into the die (5) and to accommodate tubular containers (3) of different lengths.

9. Apparatus according to claim 7 or 8, wherein the abutment means comprises a shoulder (20) formed on the inner shell (14).

10. Apparatus according to any of claims 6 to 9, wherein the proximal end of the inner shell (14) opposite the punch (10) defines one face (6) of the die (5), and the punch (10) defines a corresponding opposite face of the die (5).

11. Apparatus according to any preceding claim, wherein the die (5) is configured such that the exposed end of the container (3) within the die (5) is sandwiched between respective inner and outer lips (32, 33) of thermoplastic material associated with the base (2) to enhance mechanical engagement and thermoplastic bonding between the container (3) and the base (2).

12. Apparatus according to any preceding claim, further including cooling means to direct coolant through the punch (10) or the die (5).

13. Apparatus according to claim 12 when dependent on claim 6, wherein the cooling means is further adapted to direct coolant through at least one of the inner and outer supporting shells (14, 15).

14. Apparatus according to any preceding claim, including a pair of the said dies (5) disposed to shuttle beneath a single punch (10), thereby permitting one container (3) to be loaded into a first one of the dies (5), whilst the punch (10) forms a base (2) on the container (3) in a second one of the dies (5), whereby alternation of positions permits the container (3) incorporating the newly formed base (2) to be ejected from the second die (5) whilst a base (2) is simultaneously formed on the container (3) in the first die (5).

15. Apparatus according to any preceding claims, further including a rotary barrel supporting an array of the said dies (5) operable sequentially with one or more punches (10).

16. A method of forming a base (2) on a tubular container (3), the method comprising the steps of locating the container such that one end extends marginally into a die (5), heating a strip (22) of thermoplastic material, feeding the strip (22) of thermoplastic material between a punch (10) and a punch plate (7) having an aperture (8) defining an open end of the die (5), shearing off a slug of the said material by forcing the strip (22) against the plate (7), and punching the slug through the aperture (8) into forming engagement with the die (5) such that a peripheral edge of the slug is thermoplastically bonded to the exposed end of the container (3) within the die (5) to form the base (2).

17. A method according to claim 16, including the further steps of loading a tubular container (3) from a magazine into a first die (5), whilst simultaneously forming a base (2) on another tubular container (3) in a second die (5), alternating the positions of the first and second dies (5), and ejecting the other container (3) incorporating the newly formed base (2) whilst simultaneously forming a base (2) on the container (3) in the first die (5) by means of the same punch (10).

## Patentansprüche

1. Vorrichtung zum Anformen eines Bodens (2) an einen rohrförmigen Behälter (3), wobei die Vorrichtung eine Matrize (5) aufweist, sowie einen Ziehring (7) mit einer Öffnung (8), die ein offenes Ende der Matrize (5) definiert, einen Stempel (10), der mit dem Ziehring (7) und der Matrize (7) zusammenwirken kann, eine Transporteinrichtung zum Zuführen eines Bandes aus thermoplastischem Material (22) zwischen den Stempel (10) und den Ziehring (7), eine Heizeinrichtung zum Erwärmen des thermoplastischen Materials und eine Halteeinrichtung (12) zum Festhalten des Behälters (3) in der Weise, daß ein Ende geringfügig in die Matrize (5) hineinragt, wobei der Stempel (10) in einem einzigen Hub betätigbar ist, um ein Stück des Materials abzuscheren, indem der Streifen (22) gegen den Ziehring (7) gepreßt wird, und das Materialstück durch die Öffnung (8) hindurch in formschlüssigen Eingriff mit der Matrize (5) gebracht wird, so daß ein Umfangsrand des Materialstücks zum Anformen des Bodens (2) mit dem freiliegenden Ende des Behälters (3) in der Matrize (5) thermoplastisch verbunden wird.

2. Vorrichtung nach Anspruch 1, bei der die Transporteinrichtung so angeordnet ist, daß des Band (22) aus thermoplastischem Material direkt von einer Extrusionsdüse zugeführt wird.

3. Vorrichtung nach Anspruch 2, bei der die Extrusionsdüse das thermoplastische Material direkt zwischen den Stempel (10) und den Ziehring (7) zuführt und damit die Transporteinrichtung darstellt.

4. Vorrichtung nach einem der vorstehenden Ansprüche, die des weiteren eine Entlüftung (25) enthält, um die Luft während des Stempelhubs aus dem Matrizenhohlraum abzuleiten.

5. Vorrichtung nach einem der vorstehenden Ansprüche, die des weiteren eine Auswerfeinrichtung enthält, die so angeordnet ist, daß sie beim Zurückziehen des Stempels unter Druck stehendes Gas zwischen den Boden und die Form richtet, um den Behälter auszuwerfen.

6. Vorrichtung nach einem der vorstehenden Ansprüche, bei dem die Halteeinrichtung (12) einen Innenmantel (14) und einen komplemenären Außenmantel (15) enthält, um die Seitenwände des rohrförmigen Behälters (3) während des Formprozesses innen und außen abzustützen.

7. Vorrichtung nach Anspruch 6, die des weiteren eine Anschlageinrichtung (20) enthält, um das entfernte Ende des rohrförmigen Behälters (2) zu fixieren und dadurch das Ausmaß zu bestimmen, mit dem das freiliegende Ende in die Matrize (5) ragt.

8. Vorrichtung nach Anspruch 7, bei der die Anschlageinrichtung (20) verstellbar ist, um ein selektives Ändern des Ausmaßes, um das das freiliegende Ende in die Matrize (5) ragt, zu gestatten und um rohrförmige Behälter (3) verschiedener Längen aufnehmen zu können.

9. Vorrichtung nach Anspruch 7 oder 8, bei der die Anschlageinrichtung eine Schulter (20) umfaßt, die an dem Innenmantel (14) ausgeformt ist.

10. Vorrichtung nach einem der Ansprüche 6 bis 9, bei der das proximale Ende des Innenmantels (14) gegenüber dem Stempel (10) eine Fläche (6) der Matrize (5), und der Stempel (10) eine entsprechende Gegenfläche der Matrize (5) definieren.

11. Vorrichtung nach einem der vorstehenden Ansprüche, bei der die Matrize (5) so gestaltet ist, daß das freiliegende Ende des Behälters (3) in der Matrize (5) zwischen entsprechenden Innen- und Außenlippen (32, 33) des zum Boden (2) gehörenden thermoplastischen Materials gefaßt wird, um den mechanischen Eingriff und die thermoplastische Verbindung zwischen dem Behälter (3) und dem Boden (2) zu verbessern.

12. Vorrichtung nach einem der vorstehenden Ansprüche, die des weiteren eine Kühleinrichtung enthält, um Kühlmittel durch den Stempel (10) oder die Matrize (5) zu leiten.

13. Vorrichtung nach Anspruch 12 in Verbindung mit Anspruch 6, bei der die Kühleinrichtung des weiteren so ausgeführt ist, daß sie Kühlmittel durch mindestens einen der inneren und äußeren Stützmäntel (14, 15) leitet.

14. Vorrichtung nach einem der vorstehenden Ansprüche, die ein Paar der genannten Matrizen (5) enthält, die so angeordnet sind, daß sie unterhalb eines einzigen Stempels (10) hin- und hergehen, so daß ein Behälter (3) in eine erste der Matrizen (3) eingelegt werden kann, während der Stempel (10) einen Boden (2) an den Behälter (3) in der zweiten der Matrizen (5) anformt, wobei ein Positionswechsel gestattet, den Behälter (3) mit dem neu angeformten Boden (2) aus der zweiten Matrize (3) auszuwerfen, während gleichzeitig ein Boden (2) an dem Behälter (3) in der ersten Matrize (3) angeformt wird.

15. Vorrichtung nach einem der vorstehenden Ansprüche, die des weiteren eine drehbare Trommel enthält, die eine Anordnung der Matrizen (5) trägt, die sequentiell mit einem oder mehreren der Stempel (10) eingesetzt werden können.

16. Verfahren zum Anformen eines Bodens (2) an einen rohrförmigen Behälter (3), wobei das Verfahren folgende Schritte umfaßt: Festhalten des Behälters in der Weise, daß ein Ende geringfügig in eine Matrize (5) ragt, Erwärmen eines Bandes (22) aus thermoplastischem Material, Zuführen des Bandes (22) aus thermoplastischem Material zwischen einen Stempel (10) und einen Ziehring (7) mit einer Öffnung (8), die ein offenes Ende der Matrize (5) definiert, Abscheren eines Materialstücks, indem der Streifen (22) gegen den Ziehring (7) gepreßt wird, und Stoßen des Materialstücks durch die Öffnung (8) hindurch in formschlüssigen Eingriff mit der Matrize (5), so daß ein Umfangsrand des Materialstücks zum Anformen des Bodens (2) mit dem freiliegenden Ende des Behälters (3) in der Matrize (5) thermoplastisch verbunden wird.

17. Verfahren nach Anspruch 16, das des weiteren folgende Schritte enthält: Einsetzen eines rohrförmigen Behälters (3) aus einem Magazin in eine erste Matrize (5), während gleichzeitig ein Boden (2) an einen anderen rohrförmigen Behälter (3) in einer zweiten Matrize (5) angeformt wird, Wechseln der Positionen der ersten und zweiten Matrize (5) und Auswerfen des anderen Behälters (3) mit dem neu angeformten Boden (2), während gleichzeitig mittels desselben Stempels (10) ein Boden (2) an den Behälter (3) in der ersten Matrize (5) angeformt wird.

## Revendications

1. Appareil pour former une base (2) sur un conteneur tubulaire (3), l'appareil comprenant une matrice (5), une plaque de poinçonnage (7) ayant une ouverture (8) définissant une extrémité ouverte de la matrice (5), un poinçon (10) apte à coopérer avec la plaque de poinçonnage (7) et la matrice (5), un moyen de transport pour faire avancer une bande (22) de matière thermoplastique entre le poinçon (10) et la plaque de poinçonnage (7), un moyen de chauffage pour chauffer la matière thermoplastique, et un moyen de positionnement (12) pour positionner le conteneur (3) de façon telle qu'une extrémité s'étende très légèrement dans la matrice (5), le poinçon (10) pouvant être actionné selon une course unique pour couper une pastille de la matière en forçant la bande (22) contre la plaque de poinçonnage (7) et pour poinçonner la pastille à travers l'ouverture (8) en engagement de forme avec la matrice (5) de sorte qu'un bord périphérique de la pastille est lié de façon thermoplastique à l'extrémité exposée du conteneur (3), dans la matrice (5), pour former la base (2).

2. Appareil selon la revendication 1, dans lequel le moyen de transport est disposé pour faire avancer la bande (22) de matière thermoplastique directement depuis une matrice d'extrusion.

3. Appareil selon la revendication 2, dans lequel la matrice d'extrusion fait avancer la matière thermoplastique directement entre le poinçon (10) et la plaque de poinçonnage (7) et constitue ainsi ledit moyen de transport.

4. Appareil selon l'une quelconque des revendications précédentes, incluant en outre un évent (25) pour diriger l'air provenant de la cavité de matrice durant la course du poinçon.

5. Appareil selon l'une quelconque des revendications précédentes, incluant en outre un moyen d'éjection disposé pour diriger du gaz sous pression entre la base et la matrice lors du retrait du poinçon pour éjecter le conteneur.

6. Appareil selon l'une quelconque des revendications précédentes, dans lequel le moyen de positionnement (12) comprend une chemise intérieure (14) et une chemise extérieure (15) complémentaire, disposées respectivement de façon à fournir un support intérieur et extérieur aux parois latérales du conteneur tubulaire (3) durant le procédé de formage.

7. Appareil selon la revendication 6, incluant en outre un moyen de butée (20) pour positionner l'extrémité distante du conteneur tubulaire (2) et déterminer ainsi le degré selon lequel l'extrémité exposée s'étend dans la matrice (5).

8. Appareil selon la revendication 7, dans lequel le moyen de butée (20) peut être ajusté pour permettre une variation sélective du degré selon lequel l'extrémité exposée s'étend dans la matrice (5) et pour recevoir des conteneurs tubulaires (3) de longueurs différentes.

9. Appareil selon la revendication 7 ou 8, dans lequel le moyen de butée comprend un épaulement (20) formé sur la chemise intérieure (14).

10. Appareil selon l'une quelconque des revendications 6 à 9, dans lequel l'extrémité proximale de la chemise intérieure (14) faisant face au poinçon (10) définit une face (6) de la matrice (5) et le poinçon (10) définit une face correspondante opposée de la matrice (5).

11. Appareil selon l'une quelconque des revendications précédentes, dans lequel la matrice (5) présente une configuration telle que l'extrémité exposée du conteneur (3) dans la matrice (5) est prise en sandwich entre les lèvres respectives intérieure et extérieure (32, 33) de la matière thermoplastique associée à la base (2) pour renforcer l'engagement mécanique et la liaison thermoplastique entre le conteneur (3) et la base (2).

12. Appareil selon l'une quelconque des revendications précédentes, incluant en outre un moyen de refroidissement pour diriger du liquide de refroidissement à travers le poinçon (10) ou la matrice (5).

13. Appareil selon la revendication 12 lorsqu'elle est dépendante de la revendication 6, dans lequel le moyen de refroidissement est en outre adapté pour diriger du liquide de refroidissement à travers au moins une des chemises de support intérieure et extérieure (14, 15).

14. Appareil selon l'une quelconque des revendications précédentes, incluant une paire desdites matrices disposées pour faire la navette sous un unique poinçon (10), en permettant ainsi à un conteneur (3) d'être chargé dans une première des matrices (5), pendant que le poinçon (10) forme une base (2) sur le conteneur (3) dans une seconde des matrices (5), grâce à quoi l'alternance des positions permet au conteneur (3) incorporant la base nouvellement formée (2) d'être éjectée de la seconde matrice (5) pendant qu'une base (2) est formée simultanément sur le conteneur (3) dans la première matrice.

15. Appareil selon l'une quelconque des revendications précédentes, incluant en outre un barillet rotatif supportant une rangée desdites matrices (5) pouvant être actionné de façon séquentielle avec un ou plusieurs poinçons (10).

16. Procédé de formation d'une base (2) sur un conteneur tubulaire (3), le procédé comprenant les étapes de positionnement du conteneur de sorte qu'une extrémité s'étende très légèrement dans une matrice (5), de chauffage d'une bande (22) de matière thermoplastique, d'avancement de la bande (22) de matière thermoplastique entre un poinçon (10) et une plaque de poinçannage (7) ayant une ouverture (8) définissant une extrémité ouverte de la matrice (5), de découpage d'une pastille de ladite matière en forçant la bande (22) contre la plaque de poinçonnage (7), et de poinçonnage de la pastille par l'ouverture (8) en engagement de forme avec la matrice (5) de sorte qu'un bord périphérique de la pastille est lié de façon thermoplastique à l'extrémité exposée du conteneur (3), dans la matrice (5), pour former la base (2).

17. Procédé selon la revendication 16, incluant les étapes supplémentaires de chargement d'un conteneur tubulaire (3) depuis un magasin dans une première matrice (5), pendant que l'on forme simultanément une base (2) sur un autre conteneur tubulaire (3) dans une seconde matrice (5), d'alternance des positions des première et seconde matrices (5), et d'éjection de l'autre conteneur (3) incorporant la base nouvellement formée (2) pendant que l'on forme simultanément une base (2) sur le conteneur (3), dans la première matrice (5), au moyen du même poinçon (10).
